# NEUE EUROPÄISCHE PATENTSCHRIFT

(11) **EP 3 150 898 B2**
(45) Veröffentlichungstag und Bekanntmachung des Hinweises auf die Entscheidung über den Einspruch: **15.05.2024**
(45) Hinweis auf die Patenterteilung: 01.09.2021
(21) Anmeldenummer: 16191356.1
(22) Anmeldetag: 29.09.2016
(51) Int. Cl.: F16P 3/14, G06K 9/00

(54) **VERFAHREN ZUR AUTOMATISIERTEN STEUERUNG EINER MASCHINENKOMPONENTE**
METHOD FOR AUTOMATED CONTROL OF A MACHINE COMPONENT
PROCEDE DE COMMANDE AUTOMATISEE D'UN COMPOSANT DE MACHINE

(30) Priorität: 01.10.2015 AT 508352015
(43) Veröffentlichungstag der Anmeldung: 05.04.2017
(73) Patentinhaber: B&R Industrial Automation GmbH, 5142 Eggelsberg (AT)
(72) Erfinder: Kaufleitner, Franz, 5122 Hochburg-Ach (AT); Veselic, Miodrag, 6800 Feldkirch (AT); Burgstaller, Walter, 5164 Seeham (AT)
(74) Vertreter: Patentanwälte Pinter & Weiss OG

(56) Entgegenhaltungen:
- EP-A2- 1 876 383
- WO-A1-2014/202471
- DE-A1- 19 742 716
- DE-A1- 19 939 567
- DE-B3- 10 224 031
- US-A1- 2005 205 763
- Anonymous: "Feldbus - Wikipedia", , 4. Juni 2015 (2015-06-04), XP055344556, Gefunden im Internet: URL:http://web.archive.org/web/20150604073 452/https://de.wikipedia.org/wiki/Feldbus [gefunden am 2017-02-10]

## Beschreibung

Die Erfindung betrifft ein Verfahren zur automatisierten Steuerung von zumindest einer Maschinenkomponente in einer Anlage, wobei die Maschinenkomponente mit einer Automatisierungskomponente gesteuert wird, wobei die Anlage einen mittels zumindest eines Sicherheitssensors überwachten Sicherheitsbereich aufweist und wobei die Maschinenkomponente eine Schutzhandlung ausführt, wenn eine von dem Sicherheitssensor detektierte Gefahrensituation für Schutzobjekte, insbesondere Personen und/oder materielle Werte, eintritt.

Weiters betrifft die Erfindung eine Automatisierungskomponente zur Steuerung von zumindest einer Maschinenkomponente in einer Anlage.

Sensoren für die Überwachung von Sicherheitsbereichen werden in sicherheitstechnischen Anwendungen eingesetzt, um Objekte in den Bereichen zu detektieren. Solche Sensoren können mit optischen Verfahren (zum Beispiel Lichtgitter, Lichtschranke, Kamera, Laserscanner, etc.) mit akustischen Verfahren (zum Beispiel Schalldetektoren), induktiven Verfahren, wärmesensitiven Verfahren oder anderem arbeiten.

Bei diesen Sensoren entstehen vielfältige Informationen, die ein Objekt im Schutzfeld liefert, z.B. unterbrochene Strahlen bei der Überwachung durch ein Lichtgitter, Time-of-Light-Werte bei einer Lichtschranke, Bild bei einer Kamera, und dergleichen. In sicherheitstechnischen Anwendungen, die die Wahrung der Unversehrtheit von Menschen zum Ziel haben, werden im Stand der Technik derzeit ausschließlich Sensoren verwendet, die über eine eigene Auswerteeinheit verfügen, und die das Messergebnis als einzelnes Bit (d.h. als ein Wahrheitswert: Gefahrensituation vorhanden, Ja/Nein) an eine übergeordnete Sicherheitssteuerung übertragen welche dann gegebenenfalls die weiteren Sicherheitsmaßnahmen einleitet. Durch diese starke Kopplung zwischen der Auswertung der Information und der Erfassung dieser Information bleibt für die übergeordnete Sicherheitssteuerung nur die reduzierte Information "Gefahrensituation vorhanden" oder "keine Gefahrensituation vorhanden".

Eine "Gefahrensituation" ist insbesondere dann gegeben, wenn ein schutzwürdiges Objekt, also insbesondere eine Person oder ein Körperteil einer Person, sich in dem Sicherheitsbereich befindet, aber auch andere Gegenstände, die einen schützenswerten materiellen Wert darstellen. Solche schutzwürdigen Objekte werden im Folgenden allgemein als Schutzobjekt bezeichnet. Eine Gefahrensituation kann jedoch auch von einer Fehlfunktion ausgehen, etwa wenn sich Teile der Maschinenkomponente oder andere Anlagenobjekte nicht in ihrer richtigen Position befinden. Als Anlagenobjekte können dabei alle Objekte angesehen werden, die am Arbeitsablauf der Maschinenkomponente beteiligt sind, also neben den Teilen der Maschinenkomponente selbst beispielsweise auch von der Maschinenkomponente bearbeitete Produkte.

Sicherheitssensoren, zum Beispiel in Form eines Lichtgitters, müssen somit in der Lage sein, Anlagenobjekte, die sich in der ihnen zugedachten Position bzw. Bewegung befinden, von Schutzobjekten, deren Anwesenheit im Sicherheitsbereich eine Schutzhandlung erfordert, zu unterscheiden. Damit Anlagenobjekte dennoch die Sicherheitssensoren passieren können, besteht die Notwendigkeit, beim Passieren dieser Anlagenobjekte einzelne Sensoren bzw. einzelne Strahlen des Lichtgitters für eine definierte Zeitdauer auszublenden. Ein Verfahren, bei dem das Lichtgitter unter bestimmten Bedingungen für eine gewisse Zeitdauer überbrückt wird, wird als Muting bezeichnet. Ein Verfahren, bei dem einzelne Strahlen des Lichtgitters ausgeblendet werden (als nicht das gesamte Lichtgitter überbrückt wird), bezeichnet man als Blanking. Im Fall eines Lichtgittersensors wird derzeit der Sensor mit den entsprechenden Informationen versorgt, und die Auswerteeinheit des Sensors entscheidet, ob sich ein Schutzobjekt im Sicherheitsbereich befindet. Diese Information - in der Regel ein einzelnes Bit - wird dann an eine übergeordnete Sicherheitssteuerung übertragen welche dann die weiteren Sicherheitsmaßnahmen einleitet.

DE 197 42 716 A1 offenbart eine Steuer- und Datenübertragungsanlage und ein Verfahren zum Übertragen von sicherheitsbezogenen Daten. Kerngedanke ist es ein Feldbussystem mit Sicherheitsfunktionen auszustatten, so dass sicherheitsrelevante Signal über den Feldbus anstelle von separaten Leitungen übertragen werden können.

DE 199 39 567 A1 geht von der zuvor genannten Offenlegungsschrift aus und schlägt vor, alle Busteilnehmer mit "Intelligenz" in Form von Signaleinheiten auszustatten, die in der Lage sind Fehlertelegramme zu erstellen und auszuwerten.

EP 1443343A2 offenbart einen optischen Sensor zur Sicherung eines Überwachungsbereichs. Der Sensor weist eine Auswerteeinheit aus, die in Abhängigkeit der jeweiligen Sensormessung Schaltsignale generiert, die jeweils bestimmte Arbeitsgeräte deaktivieren. Im Überwachungsbereich können Schutzfelder definiert sein, die jeweils Sicherheitsschaltausgängen zugeordnet sind. Die Zuordnung der Schutzfelder zu den Sicherheitsschaltausgängen kann vor Inbetriebnahme des optischen Sensors festgelegt werden. Ein Anwendungsspezifische Kombination der Daten der Einzelstrahlen mit anderen Prozessdaten wie beispielsweise Betriebszustand der Maschine, Geschwindigkeitsinformation einer Bewegung, Positionsinformationen von Maschinenteilen ist nicht ohne weiteres möglich, sondern erfordert immer eine aufwändige Programmierung des Sensors, um die Zuordnungen zu definieren.

WO 2014/202471 A1 offenbart eine Vorrichtung und ein Verfahren zum Absichern einer automatisiert arbeitenden Maschine, wobei ein Schutzbereich über ein Kamera-basiertes Sicherheitssystem überwacht wird. Dabei werden Kamerabilder von dem Schutzbereich in einer Auswerteeinheit ausgewertet, welche in dem Schutzbereich vorhandene oder eindringende Fremdobjekte durch Analyse der Kamerabilder klassifiziert. Um ungewollte Abschaltungen zu verhindern, wird anhand eines oder mehrerer für Schweißfunken charakteristischer Merkmale bestimmt, ob es sich bei dem Fremdobjekt um einen Schweißfunken handelt, oder ob eine Gefahrensituation vorliegt. Bei Erkennen einer Gefahrensituation erzeugt die Auswerteeinheit ein OSSD-Signal, welches an eine Sicherheitssteuerung übermittelt wird, die dann ein Abschalten der Maschine bewirkt.

US 2005/0205763 A1 offenbart ein Lichtgitter mit einer Auswerteeinheit zur Überwachung eines Sicherheitsbereichs. Um definierten Objekten ein Passieren des Lichtgitters zu ermöglichen, ist die Auswerteeinheit mit einem Positionssensor verbunden, der die Position des Objekts ermittelt und diese Daten der Auswerteeinheit bereitstellt.

Die vom Sensor gemessenen Daten müssen im Stand der Technik immer "verdichtet" werden, bevor sie über eine Busverbindung zu einer Automatisierungseinrichtung übermittelt werden. Diese Verdichtung erfolgt auf Basis einer Objekterkennung im Sensor selbst.

Um die Komplexität der Sicherheitsstrategie zu erhöhen, wäre es im Stand der Technik möglich, den Sensor mit weiteren Signaleinheiten zu versehen, um die Auswerteeinheit im Sensor in die Lage zu versetzen, solche Signale aufzunehmen und bei der Auswertung mit zu berücksichtigen. Das wiederum hat aber den Nachteil, dass der Sensor gegebenenfalls mit einer Vielzahl unterschiedlicher Signaleinheiten ausgestattet werden müsste und damit die Komplexität des Sensors sehr schnell steigt. Außerdem muss der Sensor in vielen unterschiedlichen Ausführungen am Markt angeboten werden um die unterschiedlichen Anforderungen kostengünstig gerecht zu werden. Auch ist man bei der Anwendung eines Sensors auf die verfügbare Signaleinheit beschränkt und kann als Anwender keine neue Kombination, die der Hersteller des Sensors noch nicht berücksichtigt hat, anwenden. Jede Erhöhung der vom Sensor bewältigbaren Komplexität der Zuordnungen erfordert somit eine Erhöhung der Leistungsfähigkeit der Auswerteeinheit und führt zu einer Erhöhung der Gesamtkosten.

Um die Information der Signaleinheit gegebenenfalls auch im verbleibenden Automatisierungssystem außerhalt des Sensors verwenden zu können, müssten die Signaleinheiten gegebenenfalls doppelt verdrahtet werden.

Der gegenständlichen Erfindung liegt die Aufgabe zugrunde, ein Verfahren bereitzustellen, mit dem es möglich wird, auch komplexe Sicherheitsstrategien mit verhältnismäßig einfachen Sensoren umzusetzen. Zusätzlich soll das Verfahren eine flexible Definition der jeweiligen Sicherheitsstrategie ermöglichen, ohne dass der Anwender auf die vom Sensorhersteller berücksichtigen Strategien eingeschränkt ist.

Diese und weitere Ziele der Erfindung werden durch ein Verfahren der eingangs genannten Art erreicht, bei dem die Maschinenkomponente über eine sichere Bus-Verbindung mit der Automatisierungskomponente verbunden ist, wobei die Automatisierungskomponente die Maschinenkomponente steuert, indem sie über die sichere Bus-Verbindung Steuerbefehle an die Maschinenkomponente übermittelt und die Automatisierungskomponente von der Maschinenkomponente über die sichere Bus-Verbindung Feedback-Signale als Prozessdaten zurückübermittelt bekommt, und der Sicherheitssensor über die sichere Bus-Verbindung mit der Automatisierungskomponente verbunden ist, wobei ein von dem Sicherheitssensor gemessenes Messmuster, welches unverdichtete Messdaten des Sicherheitssensors enthält, welche lediglich die vom Sicherheitssensor gemessenen Informationen enthalten und nicht mit anderen Daten oder Parametern verknüpft wurden, wobei die unverdichteten Messdaten den Messdaten des Sicherheitssensors entsprechen, bevor sie einer Objektbewertung unterzogen wurden,
über die sichere Bus-Verbindung an die Automatisierungskomponente übermittelt wird, wobei die Automatisierungskomponente das Vorliegen einer Gefahrensituation auf Basis des Messmusters und unter Verwendung der Prozessdaten der Steuerung der Maschinenkomponente ermittelt und die Maschinenkomponente über die sichere Bus-Verbindung zur Ausführung der Schutzhandlung ansteuert. Dies erlaubt eine von der Auswerteeinheit des Sicherheitssensors unabhängige Umsetzung von Sicherheitsstrategien. Eine Änderung der Sicherheitsstrategie erfordert keine Umprogrammierung der Sensorfunktionalitäten. Vielmehr kann der Sicherheitssensor vollkommen ohne Auswerteeinheit auskommen und so auf einen minimalen Aufwand reduziert werden.

Im Unterschied zu einer "verdichteten" Sensorinformation, die auf einer Objekterkennung im Sensor beruht, enthält das Messmuster unverdichtete Messdaten, die lediglich die vom Sensor gemessene Information enthalten und nicht mit anderen Daten oder Parametern verknüpft wurden. Als "unverdichtet" sind in diesem Zusammenhang insbesondere Daten Anzusehen, die den Messdaten des Sensors entsprechen, bevor sie einer Objektbewertung unterzogen wurden. Das Messmuster kann beispielsweise die Pixelinformation eines Sicherheitssensors, beispielsweise eines Lichtgitters, im Wesentlichen vollständig darstellen. Als unverdichtet können auch Daten angesehen werden, deren Informationsgehalt reduziert wurde, etwa wenn vom Sensor gemessene Helligkeitswerte auf Pixelebene auf eine binäre Aussage (z.B.: Lichtgitterstrahl unterbrochen/frei) reduziert sind.

Als "Sicherheitsstrategie" wird im Zusammenhang mit der gegenständlichen Erfindung die jeweilige Zusammenstellung von Regeln und Zusammenhängen bezeichnet, die zur Erkennung von Gefahrensituationen und zur Ausführung von dementsprechenden Schutzhandlungen in der Anlage vorgesehen sind.

In einer bevorzugten Ausführungsform der Erfindung kann die Schutzhandlung ein Deaktivieren von zumindest Teilen der Maschinenkomponente, das Einnehmen einer Schutzposition, eine aktive Reaktion, wie zum Beispiel das Stoppen von zumindest Teilen der Maschinenkomponente, eine Änderung einer Geschwindigkeit von zumindest Teilen der Maschinenkomponente, eine Ausweichbewegung, das Auslösen einer Schutzvorrichtung, wie etwa einem Airbag oder einer Löscheinrichtung, das Auslösen eines Alarms oder Kombinationen davon umfassen.

Die Bewertung, ob sich ein schutzwürdiges Objekt im Schutzbereich befindet, erlaubt eine automatisierte Erkennung einer Gefahrensituation, wobei als Gefahrensituation das Erkennen von Fremdgegenständen oder Person in dem Sicherheitsbereich, das Erkennen von Positionierfehlern von Teilen der Maschinenkomponente und/oder das Erkennen von Positionierfehlern von Anlagenobjekten definiert sein kann. Die Gefahrensituationen und die Art und Weise der darauf abgestimmten Schutzhandlungen (die einen Teil der Sicherheitsstrategie bilden), können erfindungsgemäße auf einfache Weise angepasst werden, ohne Veränderungen am Sensor selbst vornehmen zu müssen.

In vorteilhafter Weise kann der Sicherheitssensor zumindest eine Lichtgitteranordnung aufweisen. Beispielsweise können Lichtgitter für einen Fingerschutz mit einem Strahlenabstand von etwa 14 mm, für einen Handschutz mit einem Strahlenabstand von etwa 30 mm, für einen Körperschutz mit einem Strahlenabstand von etwa 100 bis etwa 300 mm und für einen Zugangsschutz mit einem Strahlenabstand von etwa 400 bis etwa 500 mm verwendet werden. Diese Ausführungsvarianten sind herkömmlicher Weise im Handel erhältlich.

Um mit einem vorhandenen Lichtgitter oder mit einem Lichtgitter mit einer standardmäßigen Strahlenabstand eine höhere Gitterauflösung (d.h. einem geringeren Abstand zwischen zwei nebeneinanderliegenden Gitterstrahlen) zu erreichen, können in vorteilhafter Weise zumindest zwei Lichtgitteranordnungen hinsichtlich ihrer Gitterebene parallel nebeneinander und hinsichtlich der Längserstreckung ihrer Lichtsensoren versetzt zueinander angeordnet sein.

In einer weiteren vorteilhaften Ausführungsform kann zumindest eine Lichtgitteranordnung schräg zu einer Bewegungsrichtung eines Anlagenobjekts angeordnet sein. Ein Anlagenobjekt mit einer definierten Form, das mit einer bekannten Geschwindigkeit durch die Lichtgitteranordnung hindurchtritt, erzeugt dadurch einen spezifischen zeitlichen Ablauf des Messmusters, der, zur Vermeidung einer fehlerhaften Schutzhandlung, von der Automatisierungskomponente berücksichtigt werden muss. Durch die Schrägstellung kann sichergestellt werden, dass das Anlagenobjekt an einer genau definierten Position zuerst in das Lichtgitter eintritt. Erfindungsgemäß kann daher das Unterbrechen des Sensors an diesem Eintrittspunkt den Eintrittszeitpunkt definieren und als Auslöseereignis für einen Blanking- oder Mutingvorgang verwendet werden.

Die Automatisierungskomponente ermittelt die Gefahrensituation auf Basis des Messmusters und unter Verwendung von Prozessdaten der Steuerung der Maschinenkomponente. Der Sicherheitssensor benötigt auch keinerlei Schnittstellen zum Empfangen von Daten. Die gestellten Aufgaben, einschließlich der Umsetzung komplexer Sicherheitsstrategien, können somit gemäß dem erfindungsgemäßen Verfahren mit Sicherheitssensoren ausgeführt werden, die lediglich über eine Schnittstelle für eine ausgehende Datenkommunikation verfügen.

Die Prozessdaten können beispielsweise ausgewählt sein aus einer Position, einer Geschwindigkeit und/oder einer Beschleunigung von Bestandteilen der Maschinenkomponente. Dies erlaubt die Umsetzung sehr komplexer und auf die jeweiligen Gegebenheiten optimal abgestimmter Sicherheitsstrategien.

In vorteilhafter Weise kann die Automatisierungskomponente einen Definitionsbereich definieren, wobei ein Abweichen des von dem Sicherheitssensor gemessenen und an die Automatisierungskomponente übermittelten Messmusters oder eines Teilbereichs dieses Messmusters von dem Definitionsbereich eine Gefahrensituation anzeigt. Erfindungsgemäß kann die Automatisierungskomponente für die Ermittlung des Definitionsbereichs ein aktuelles oder vergangenes Messmuster des Sicherheitssensors berücksichtigen. Der Sensor kann somit gleichzeitig zur Detektion von Anlagenobjekten, als auch für die eigentliche Sicherheitsfunktionalität verwendet werden. Ein Vorsehen eines zusätzlichen Sensors, der beispielsweise ein Anlagenobjekt vor dem Eintritt in ein Lichtgitter detektiert, kann dadurch entfallen.

In vorteilhafter Weise kann eine bestimmte Änderung des aktuellen oder vergangenen Messmusters eine definierte zeitliche Änderung des Definitionsbereichs auslöst. Dadurch lassen sich komplexe Regeln für ein Blanking bzw. Muting umsetzen. Der sich ändernde Definitionsbereich erlaubt dabei dem Anlagenobjekt einen (definierten) Durchtritt durch das Lichtgitter.

In vorteilhafter Weise kann die Übertragung des Messmusters von dem zumindest einem Sicherheitssensor zu der Automatisierungskomponente über die sichere Bus-Verbindung zeitsynchron erfolgen. Dadurch können die Messwerte der verschiedenen Sicherheitssensoren am Bus richtig zugeordnet werden. "Zeitsynchron" bedeutet im Zusammenhang mit dem gegenständlichen Anmeldetext, dass das oder die Messmuster eines oder mehrerer Sicherheitssensoren von einem Busmaster der sicheren Bus-Verbindung abgerufen werden, und somit "gleichzeitig", also innerhalb eines Zyklus bzw. Zeitslots, an die Automatisierungskomponente übermittelt werden. Der Zeitpunkt der Messung, auf dem das Messmuster beruht, ist besonders kritisch, wenn das Messmuster mit anderen Prozessdaten der Steuerung abgeglichen wird. Ein Zyklus weist in herkömmlichen sicheren Bussystemen üblicherweise eine definierte Länge von etwa 200 µs bis zu etwa 1 bis 2 ms auf.

Alternativ dazu oder zusätzlich können die von dem Sicherheitssensor zu der Automatisierungskomponente übertragenen Messdaten jeweils mit einem Zeitstempel versehen sein. Auch dies erlaubt der Automatisierungskomponente eine exakte zeitliche Zuordnung von Messmustern. Die jeweilig bevorzugte Lösung ist von den jeweiligen Spezifikationen des Bussystems abhängig.

Die erfindungsgemäße Automatisierungskomponente zur Steuerung von zumindest einer Maschinenkomponente in einer Anlage steuert die Maschinenkomponente, indem sie über eine sichere Bus-Verbindung Steuerbefehle an die Maschinenkomponente übermittelt und die Automatisierungskomponente von der Maschinenkomponente über die sichere Bus-Verbindung Feedback-Signale als Prozessdaten zurückübermittelt bekommt, wobei die Automatisierungskomponente eine Schnittstelle über die sichere Bus-Verbindung zu zumindest einem Sicherheitssensor aufweist, wobei der Sicherheitssensor einen Sicherheitsbereich überwacht und wobei der Sicherheitssensor ein gemessenen Messmuster, welches unverdichtete Messdaten des Sicherheitssensors enthält, über die sichere Bus-Verbindung an die Automatisierungskomponente übermittelt, wobei die Automatisierungskomponente das Messmuster auswertet und unter Verwendung der Prozessdaten der Steuerung der Maschinenkomponente das Vorliegen einer Gefahrensituation für Schutzobjekte, insbesondere Personen und/oder materielle Werte, ermittelt, und die Maschinenkomponente bei Vorliegen einer Gefahrensituation über die sichere Bus-Verbindung zur Ausführung einer Schutzhandlung ansteuert. Eine solche Automatisierungskomponente erlaubt eine vorteilhafte Umsetzung des oben dargelegten erfindungsgemäßen Verfahrens. Vorzugsweise kann die Automatisierungskomponente zu diesem Zweck Mittel aufweisen, die zur Durchführung von einzelnen, mehreren oder allen Schritten des oben definierten Verfahrens ausgebildet sind.

In einer bevorzugten Ausführungsform kann die Automatisierungskomponente die von dem zumindest einen Sicherheitssensor erhaltenen Messmuster auf Basis einer Zeitinformation mit den Prozessdaten in Verbindung setzen.

Bevorzugter Weise kann die Automatisierungskomponente die Zeitinformation des Messmusters auf Basis einer zeitsynchronen Übermittlung über die sichere Bus-Verbindung und/oder auf Basis eines Zeitstempels ermitteln.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig.1 eine schematische Darstellung einer Anlage, in der das erfindungsgemäße Verfahren ausgeführt werden kann und
Fig. 2 bis 5 den schematischen Ablauf eines Blanking- bzw. Mutingvorgangs gemäß einer Ausführungsform des erfindungsgemäßen Verfahrens.

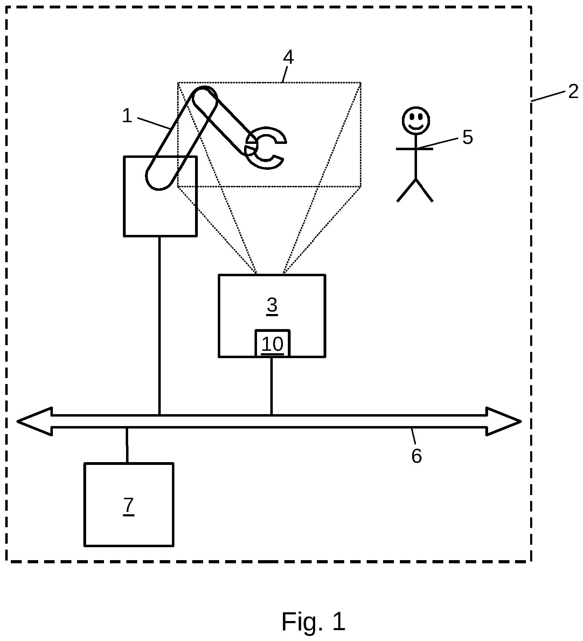

In Fig. 1 sind die wesentlichen Elemente einer Anlage 2 dargestellt, in der eine Maschinenkomponente 1 angeordnet ist. Die Maschinenkomponente 1 kann beispielsweise eine beliebige Arbeitsmaschine oder, wie in Fig. 1 schematisiert dargestellt, ein Roboter sein, wobei die beweglichen Teile der Maschinenkomponente 1 einen Sicherheitsbereich 4 definieren, in dem die beweglichen Teile der Maschinenkomponente 1 eine potentielle Gefahr für die Sicherheit eines Schutzobjekts 5 darstellen können, wobei das Schutzobjekt 5 eine Bedienperson, einzelne Gliedmaßen oder Körperteile dieser Bedienperson, ein anderes Anlagenobjekt, das sich im Sicherheitsbereich 4 befinden kann, ein Objekt das einen schützenswerten materiellen Wert darstellt, oder in bestimmten Anwendungsfällen auch ein Tier oder eine Pflanze sein kann.

Der Sicherheitsbereich 4 wird durch einen Sicherheitssensor 3 überwacht, wobei der Sicherheitssensor 3 beispielsweise als optischer Sensor, wie etwa als Lichtgitter, Lichtschranke, Laserscanner, Kamera, etc., als akustischer Sensor, als induktiver Sensor oder als Wärmesensor ausgeführt sein kann. Der Sensor kann auch als Kombination mehrerer dieser Sensorarten ausgeführt sein, wobei entweder der gesamte Sicherheitsbereich 4, oder auch nur bestimmte Bereiche davon, beispielsweise die Ein- oder Ausgänge, von dem Sicherheitssensor 3 überwacht werden können.

Gegebenenfalls kann die Anlage eine Vielzahl gleichartiger oder unterschiedlicher Maschinenkomponenten 1 aufweisen, die jeweils gemeinsame oder unterschiedliche, getrennte oder überschneidende Sicherheitsbereiche 4 definieren können. Wie dies dem Fachmann klar ist, können auch mehrere Sicherheitsbereiche 4 in einer Anlage vorhanden sein, und ein Sicherheitsbereich kann auch von mehreren Sicherheitssensoren 3 überwacht werden.

Die Steuerung der Maschinenkomponente 1 erfolgt über eine Automatisierungskomponente 7, die über eine Bus-Verbindung 6 Steuerbefehle an die Maschinenkomponente 1 übermittelt und von dieser über die Bus-Verbindung 6 Feedback-Signale zurückübermittelt bekommt.

Die Bus-Verbindung funktioniert vorzugsweise gemäß einem sicheren Busprotokoll, wie beispielsweise openSAFETY, ProfiSafe, CIPsafety, etc. Dies bietet die Möglichkeit, sicherheitstechnische Daten mit hoher Performanz, großer Bandbreite und dennoch gemäß den geltenden Sicherheitsnormen zwischen den sicherheitsbezogenen Anlagenkomponenten auszutauschen.

Allgemein können als sichere Bus-Verbindung 6 alle Bussysteme verwendet werden, die in Bezug auf die Übertragungssicherheit beispielsweise die Anforderungen gemäß IEC 61784-3 bzw. IEC 61508 erfüllen.

Der Sicherheitssensor 3 weist neben der bekannten Sensorik zur Überwachung des Sicherheitsbereichs 4 eine Kommunikationsschnittstelle 10 auf, über die das vom Sicherheitssensor 3 aufgezeichnete Messmuster M über die Bus-Verbindung 6 an die Automatisierungskomponente 7 übermittelt wird. Die Kommunikationsschnittstelle 10 kann gegebenenfalls auch eine Funktionalität für das Empfangen von Steuerdaten für den Sensor umfassen, dies ist jedoch gemäß dem erfindungsgemäßen Verfahren keine Voraussetzung. Eine Einweg-Kommunikationsschnittstelle 10, die lediglich zum Versenden von Daten über die Bus-Verbindung 6 geeignet ist, kann daher ausreichend sein.

Als "Messmuster" M wird die Gesamtheit aller zu einem bestimmten Zeitpunkt vom Sicherheitssensor aufgezeichneten Messwerte bezeichnet, wobei im Falle binärer Werte (also etwa: Lichtgitterstrahl unterbrochen/nicht unterbrochen) das Messmuster als Binärzahl angegeben werden kann, die das Messmuster M direkt abbildet. Beispielsweise kann das Messmuster M eines Lichtgitters mit acht Lichtgitterstrahlen in Form einer 8-Bit Binärzahl angegeben werden. Je nach Sensortyp kann das Messmuster M jedoch auch andere Messwerte enthalten, etwa stetig änderbare Werte (zum Beispiel der Temperatur, des (Schall-)Drucks, der Induktion, der Beschleunigung, etc.).

Im Unterschied zu den Sicherheitssensoren des Standes der Technik benötigt der Sicherheitssensor 3 keine Auswerteeinheit, die das Messmuster M auswertet und daraus einen einzelnen 1-Bit-Messwert generiert, der für das Vorhandensein einer Gefahrensituation aussagekräftig ist. Somit entfällt auch der oftmals erhebliche Aufwand für die Anwendungsspezifische Programmierung der Auswerteeinheiten der Sicherheitssensoren. Es ist auch keine Schnittstelle erforderlich, über die der Sicherheitssensor 3 Informationen von der Automatisierungskomponente 7 erhält, etwa zur Steuerung von Muting- oder Blankingvorgängen. Das erfindungsgemäße Verfahren kann somit mit einem äußerst einfach aufgebauten Sicherheitssensor 3 ausgeführt werden.

Der Sicherheitssensor 3 übermittelt das Messmuster M üblicherweise mit einer bestimmten Taktung, die auf die anderen Komponenten der Anlage 2, also etwa die Bus-Verbindung 6, die Automatisierungskomponente 7 oder die Maschinenkomponente 1 abgestimmt sein kann, an die Automatisierungskomponente 7. Die Automatisierungskomponente 7 verfügt über alle relevanten Parameterdaten, die für die Steuerung der Maschinenkomponente 1 und gegebenenfalls für die Koordination mit anderen in der Anlage 2 vorhandenen Maschinenelementen erforderlich sind. Die Automatisierungskomponente 7 ist daher in der Lage, das von dem Sicherheitssensor 3 (oder einer Vielzahl an Sicherheitssensoren 3) erhaltene Messmuster M auszuwerten und mit dem jeweiligen Maschinenzustand der Maschinenkomponente 1 zu kombinieren. Damit können unabhängig komplexe Sicherheitsstrategien umgesetzt werden, und sie können ohne Auswechslung des Sicherheitssensors 3 beliebig angepasst werden. Weiters besteht die Möglichkeit, in einer sicheren Steuerung die Daten des Sicherheitssensors mit andern Daten des sicheren Prozesses zu kombinieren. Es lassen sich somit anwendungsspezifische Szenarien programmieren, die nicht auf die starr im Sensor vorgegebenen Möglichkeiten beschränkt sind.

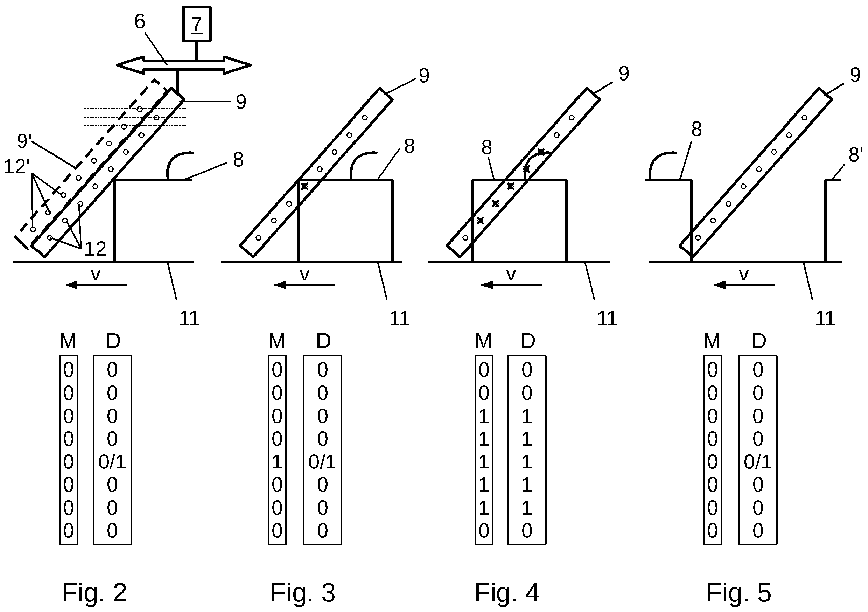

Eine beispielhafte Verwendung des erfindungsgemäßen Verfahrens wird nunmehr anhand der Fig. 2 bis 5 erläutert, wobei diese Figuren die Verwendung einer Lichtgitteranordnung 9 zur Sicherung eines Bereichs oberhalb eines Förderbandes 11, dem mit einer Geschwindigkeit v Anlagenobjekte 8 durch die Lichtgitteranordnung 9 hindurch transportiert, veranschaulicht. Die Lichtgitteranordnung 9 kann beispielsweise dazu dienen, das Förderband 11 abzustellen, wenn ein Fremdkörper in den Bereich der Lichtgitteranordnung 9 gerät (etwa wenn eine Bedienperson hineingreift), oder wenn eines der Anlagenobjekte 8 nicht in einer definierten Lage auf dem Förderband 11 angeordnet ist, oder wenn das Förderband 11 ein "falsches" Objekt transportiert.

Fig. 2 zeigt eine Lichtgitteranordnung 9 mit acht Lichtsensoren 12, sodass die Lichtgitteranordnung 9 acht parallel zueinander angeordneten Lichtgitterstrahlen aufweist, wobei das auf dem Förderband 11 angeordnete Anlagenobjekt 8 (beispielsweise ein zu bearbeitendes Werkstück) sich in einer Position kurz vor dem Eintritt in das Lichtgitter befindet. Die Lichtgitteranordnung 9 kann beispielsweise einen Eingang oder einen Ausgang in einen bzw. aus einem Sicherheitsbereich definieren und überwachen.

In Fig. 2 ist in Stichlinien beispielhaft die Anordnung einer zweiten Lichtgitteranordnung 9' angedeutet, die im Wesentlichen mit der ersten Lichtgitteranordnung 9 identisch ist, jedoch parallel (bezogen auf die Lichtgitterebenen) neben der ersten Lichtgitteranordnung 9 angeordnet ist. Die Lichtsensoren 12' der zweiten Lichtgitteranordnung 9' sind gegenüber den Lichtsensoren 12 der ersten Lichtgitteranordnung 9 hinsichtlich der Längserstreckung der Lichtgitteranordnung 9, 9' derart versetzt angeordnet, dass der Vertikalabstand zwischen zwei Lichtsensoren 12 der ersten Lichtgitteranordnung 9 jeweils durch die zusätzlichen Lichtsensoren 12' der zweiten Lichtgitteranordnung 9' effektiv halbiert wird. Dies ist in Fig. 2 durch die punktierten Linien veranschaulicht. Somit kann die Messauflösung verdoppelt (bzw. der Gitterabstand des Lichtgitters halbiert) werden. Aus Gründen der Übersichtlichkeit wird die Beschreibung ohne Berücksichtigung einer solchen zweiten Lichtgitteranordnung fortgeführt.

Das Messmuster M der Lichtgitteranordnung 9 kann als eine 8-Bit Binärzahl dargestellt werden, wobei jedes Bit einem Lichtsensor 12 entspricht und wobei im dargestellten Fall jedem unterbrochenen Lichtgitterstrahl eine 1 zugeordnet ist. Da in der in Fig. 2 dargestellten Lage alle keiner der Lichtgitterstrahlen unterbrochen ist, ergibt sich ein Messmuster M=00000000. Das Messmuster wird in einer bestimmten Taktung von der Lichtgitteranordnung 9 (die bezogen auf Fig. 1 dem Sicherheitssensor 3 entspricht), über die Bus-Verbindung 6 an die Automatisierungskomponente 7 übermittelt.

Dem Messmuster M ist in Fig. 2 ein Definitionsbereich D, der ebenfalls als Binärzahl oder als Gruppe von Binärzahlen darstellbar ist, gegenübergestellt. Der Definitionsbereich wird von der Automatisierungskomponente 7 ermittelt und verwaltet. In Fig. 2 besteht der Definitionsbereich D aus der Menge {00000000, 00001000}. Die Automatisierungskomponente 7 vergleicht, ob das aktuelle Messmuster M in den Definitionsbereich D fällt bzw. mit diesem übereinstimmt. Wenn dies nicht der Fall ist, erkennt die Automatisierungskomponente das Vorliegen einer Gefahrensituation und löst einen Notstop des Förderbandes 11 aus (das Förderband 11 entspricht dabei im Wesentlichen der Maschinenkomponente 1 in Fig. 1). Gegebenenfalls kann anstelle des Notstopps auch eine andere geeignete Schutzhandlung durchgeführt werden, etwa eine Verlangsamung der Geschwindigkeit v und/oder das Auslösen eines Alarms, etc.

Die zweite Binärzahl des oben angeführten Definitionsbereichs D ermöglicht, dass ein Lichtgitterstrahl der Lichtgitteranordnung 9 (der von unten gesehen vierte Lichtgitterstrahl) unterbrochen wird, ohne dass dies eine Schutzhandlung auslöst. Wie in Fig. 3 dargestellt ist, entspricht dies der Situation, wenn ein vom Förderband 11 befördertes Anlagenobjekt 8 in das gegenüber der Bewegungsrichtung des Anlagenobjekts 8 schräggestellte Lichtgitter eintritt. Die Unterbrechung dieses Lichtgitterstrahls löst somit zwar keine Schutzhandlung aus, sie wird aber von der Automatisierungskomponente 7 (die in Fig. 3 bis 5 der Übersichtlichkeit halber nicht nochmals dargestellt ist) als Ereignis registriert, das den Eintritt eines Anlagenobjekts 8 kennzeichnet.

Die Automatisierungskomponente 7 verfügt einerseits über alle Parameterdaten der automatisierten Steuerung und kennt andererseits auch andere Prozessdaten (z.B. Sensor- und Feedbackdaten) der gesteuerten Maschinenkomponente 1. Im sehr einfach gehaltenen Beispiel der Fig. 2 bis 5 ist der Automatisierungskomponente 7 die jeweilige Geschwindigkeit v (die ja von der Automatisierungskomponente 7 gesteuert wird) bekannt, sodass die Automatisierungskomponente 7 auf einfache Weise ermitteln kann, welche Lichtgitterstrahlen in den nächsten Zeitabschnitten von einem korrekt auf dem Förderband 11 angeordneten Anlagenobjekt 8 unterbrochen werden. Das Anlagenobjekt 8 soll nun durch das Lichtgitter transportiert werden, ohne dass eine Schutzhandlung ausgelöst wird. Wenn die Automatisierungskomponente 7 die Änderung des Messmusters M von 00000000 auf 00001000 (Fig. 2 auf Fig. 3) erkennt, löst sie dazu eine exakt auf das Anlagenobjekt 8 und auf dessen Geschwindigkeit v abgestimmte zeitliche Abfolge von Änderungen des Definitionsbereichs D aus, wobei zu jedem Zeitpunkt genau die Lichtsensoren 12 der Lichtgitteranordnung 9 durch entsprechendes Setzen der Bits des Definitionsbereichs D "ausgeblendet" werden, deren Lichtgitterstrahlen gerade von dem Anlagenobjekt 8 unterbrochen werden. Dies ist in Fig. 4 beispielhaft dargestellt.

Wenn das Anlagenobjekt 8 durch das Lichtgitter transportiert wurde (Fig. 5), setzt die Automatisierungskomponente 7 den Definitionsbereich D wieder auf den Ausgangszustand zurück, bis ein weiteres Anlagenobjekt 8' in die Lichtschranke eintritt und der nächste Blanking- bzw. Mutingvorgang ausgelöst wird.

Wenn die Automatisierungskomponente 7 neben der Geschwindigkeit v des Förderbandes 11 auch über Daten der exakten Position der Anlagenobjekte 8, 8' auf dem Förderband 11 verfügt, kann das Lichtgitter außerhalb der Blanking- bzw. Mutingvorgänge auch vollständig "geschlossen" werden (d.h. Definitionsbereich D=00000000).

Neben der Geschwindigkeit v und der Positionsdaten können je nach Anwendungsfall auch zahlreiche anderen Prozessdaten von der Automatisierungskomponente 7 verwendet werden, um Sicherheitsstrategien mit beliebiger Komplexität umzusetzen. Beispielsweise können Positions-, Geschwindigkeits-, und/oder Beschleunigungsdaten in verschiedenen Achsenrichtungen verwendet werden, beispielsweise um räumliche Bewegungen von Maschinenkomponenten, wie etwa Robotern oder Transportkränen, und anderen Objekten durch komplexe räumlich definierte Sicherheitsbereiche zu überwachen.

Das Erfindungsgemäße Verfahren ist insbesondere für alle Bereiche geeignet, in denen Automatisierungssysteme eingesetzt werden und wo sicherheitstechnische Vorkehrungen zum Schutz von Personen und Objekten getroffen werden müssen. Insbesondere dient das Erfindungsgemäße Verfahren zum Schutz der körperlichen Unversehrtheit von Personen in Industrieanlagen, die über ein Automatisierungssystem gesteuert werden.

### Bezuaszeichen:

Maschinenkomponente (1)
Anlage (2)
Sicherheitssensoren (3)
Sicherheitsbereich (4)
Schutzobjekt (5)
Bus-Verbindung (6)
Automatisierungskomponente (7)
Anlagenobjekt (8)
Lichtgitteranordnung (9, 9')
Kommunikationsschnittstelle (10)
Förderband 11
Lichtsensor 12, 12'

## Patentansprüche

1. Verfahren zur automatisierten Steuerung von zumindest einer Maschinenkomponente (1) in einer Anlage (2), wobei die Maschinenkomponente (1) mit einer Automatisierungskomponente (7) gesteuert wird, wobei die Anlage (2) einen mittels zumindest eines Sicherheitssensors (3) überwachten Sicherheitsbereich (4) aufweist und wobei die Maschinenkomponente (1) eine Schutzhandlung ausführt, wenn eine von dem Sicherheitssensor (3) detektierte Gefahrensituation für Schutzobjekte (5), insbesondere Personen und/oder materielle Werte, eintritt, **dadurch gekennzeichnet, dass** die Maschinenkomponente (1) über eine sichere Bus-Verbindung (6) mit der Automatisierungskomponente (7) verbunden ist, wobei die Automatisierungskomponente (7) die Maschinenkomponente (1) steuert, indem sie über die sichere Bus-Verbindung (6) Steuerbefehle an die Maschinenkomponente (1) übermittelt und die Automatisierungskomponente von der Maschinenkomponente (1) über die sichere Bus-Verbindung (6) Feedback-Signale als Prozessdaten zurückübermittelt bekommt, wobei der Sicherheitssensor (3) über die sichere Bus-Verbindung (6) mit der Automatisierungskomponente (7) verbunden ist, wobei ein von dem Sicherheitssensor (3) gemessenes Messmuster (M), welches unverdichtete Messdaten des Sicherheitssensors (3) enthält, welche lediglich die vom Sicherheitssensor (3) gemessene Informationen enthalten und nicht mit anderen Daten oder Parametern verknüpft wurde, wobei die unverdichteten Messdaten den Messdaten des Sicherheitssensors (3) entsprechen, bevor sie einer Objektbewertung unterzogen wurden, über die sichere Bus-Verbindung (6) an die Automatisierungskomponente (7) übermittelt wird, wobei die Automatisierungskomponente (7) das Vorliegen einer Gefahrensituation auf Basis des Messmusters (M) und unter Verwendung der Prozessdaten der Steuerung der Maschinenkomponente (1) ermittelt und die Maschinenkomponente (1) über die sichere Bus-Verbindung (6) zur Ausführung der Schutzhandlung ansteuert.

2. Verfahren nach Anspruch 1, **dadurch gekennzeichnet, dass** die Schutzhandlung ein Deaktivieren von zumindest Teilen der Maschinenkomponente (1), das Einnehmen einer Schutzposition, eine aktive Reaktion, wie zum Beispiel das Stoppen von zumindest Teilen der Maschinenkomponente (1), eine Änderung einer Geschwindigkeit von zumindest Teilen der Maschinenkomponente (1), eine Ausweichbewegung, das Auslösen einer Schutzvorrichtung, wie etwa einem Airbag oder einer Löscheinrichtung, das Auslösen eines Alarms oder Kombinationen davon umfasst.

3. Verfahren nach einem der Ansprüche 1 oder 2, **dadurch gekennzeichnet, dass** als Gefahrensituation das Erkennen von Fremdgegenständen oder Person in dem Sicherheitsbereich (4), das Erkennen von Positionierfehlern von Teilen der Maschinenkomponente (1) und/oder das Erkennen von Positionierfehlern von Anlagenobjekten (8) definiert ist.

4. Verfahren nach einem der Ansprüche 1 bis 3, **dadurch gekennzeichnet, dass** der Sicherheitssensor (3) zumindest eine Lichtgitteranordnung (9) aufweist.

5. Verfahren nach Anspruch 4, **dadurch gekennzeichnet, dass** zumindest zwei Lichtgitteranordnungen (9, 9') hinsichtlich ihrer Gitterebene parallel nebeneinander und hinsichtlich der Längserstreckung ihrer Lichtsensoren versetzt zueinander angeordnet sind.

6. Verfahren nach einem der Ansprüche 4 oder 5, **dadurch gekennzeichnet, dass** zumindest eine Lichtgitteranordnung (9) schräg zu einer Bewegungsrichtung eines Anlagenobjekts (8) angeordnet ist.

7. Verfahren nach Anspruch 5, **dadurch gekennzeichnet, dass** die Prozessdaten ausgewählt sind aus einer Position, einer Geschwindigkeit und/oder einer Beschleunigung von Bestandteilen der Maschinenkomponente (1).

8. Verfahren nach einem der Ansprüche 1 bis 7, **dadurch gekennzeichnet, dass** die Automatisierungskomponente (7) einen Definitionsbereich (D) definiert, wobei ein Abweichen des von dem Sicherheitssensor (3) gemessenen und an die Automatisierungskomponente (7) übermittelten Messmusters (M) oder eines Teilbereichs dieses Messmusters (M) von dem Definitionsbereich (D) eine Gefahrensituation anzeigt.

9. Verfahren nach Anspruch 8, **dadurch gekennzeichnet, dass** die Automatisierungskomponente (7) für die Ermittlung des Definitionsbereichs (D) ein aktuelles oder vergangenes Messmuster (M) des Sicherheitssensors (3) berücksichtigt.

10. Verfahren nach Anspruch 9, **dadurch gekennzeichnet, dass** eine bestimmte Änderung des aktuellen oder vergangenen Messmusters (M) eine definierte zeitliche Änderung des Definitionsbereichs (D) auslöst.

11. Verfahren nach einem der Ansprüche 1 bis 10, **dadurch gekennzeichnet, dass** die Übertragung des Messmusters (M) von dem zumindest einem Sicherheitssensor (3) zu der Automatisierungskomponente (7) über die sichere Bus-Verbindung (6) zeitsynchron erfolgt.

12. Verfahren nach einem der Ansprüche 1 bis 11, **dadurch gekennzeichnet, dass** die von dem Sicherheitssensor (3) zu der Automatisierungskomponente (7) übertragenen Daten jeweils mit einem Zeitstempel versehen sind.

13. Verfahren nach einem der Ansprüche 1 bis 12, **dadurch gekennzeichnet, dass** das über die sichere Bus-Verbindung (6) an die Automatisierungskomponente (7) übermittelte Messmuster (M) eine Pixelinformation des Sicherheitssensors (3), insbesondere die Pixelinformation eines Lichtgitters, im Wesentlichen vollständig darstellt.

14. Automatisierungskomponente (7) zur Steuerung von zumindest einer Maschinenkomponente (1) in einer Anlage (2), **dadurch gekennzeichnet, dass** die Automatisierungskomponente (7) die Maschinenkomponente (1) steuert, indem sie über eine sichere Bus-Verbindung (6) Steuerbefehle an die Maschinenkomponente (1) übermittelt und die Automatisierungskomponente von der Maschinenkomponente (1) über die sichere Bus-Verbindung (6) Feedback-Signale als Prozessdaten zurückübermittelt bekommt, wobei die Automatisierungskomponente (7) eine Schnittstelle über die sichere Bus-Verbindung (6) zu zumindest einem Sicherheitssensor (3) aufweist, wobei der Sicherheitssensor (3) einen Sicherheitsbereich (4) überwacht und wobei der Sicherheitssensor (3) ein gemessenen Messmuster (M), welches unverdichtete Messdaten des Sicherheitssensors (3) enthält, welches unverdichtete Messdaten des Sicherheitssensors (3) enthält, welche lediglich die vom Sicherheitssensor (3) gemessenen Informationen enthalten und nicht mit weiteren Daten oder Parametern verknüpft wurden, wobei die unverdichteten Messdaten den Messdaten des Sicherheitssensors (3) entsprechen, bevor sie einer Objektbewertung unterzogen wurden,
über die sichere Bus-Ver-bindung (6) an die Automatisierungskomponente (7) übermittelt, wobei die Automatisierungskomponente (7) das Messmuster (M) auswertet und unter Verwendung der Prozessdaten der Steuerung der Maschinenkomponente (1) das Vorliegen einer Gefah-rensituation für Schutzobjekte (5), insbesondere Personen und/oder materielle Werte, ermittelt, und die Maschinenkomponente (1) bei Vorliegen einer Gefahrensituation über die sichere Bus-Verbindung (6) zur Ausführung einer Schutzhandlung ansteuert.

15. Automatisierungskomponente (7) nach Anspruch 14, **dadurch gekennzeichnet, dass** die Automatisierungskomponente (7) die von dem zumindest einen Sicherheitssensor (3) erhaltenen Messmuster (M) auf Basis einer Zeitinformation mit den Prozessdaten in Verbindung setzt.

16. Automatisierungskomponente (7) nach Anspruch 15, **dadurch gekennzeichnet, dass** die Zeitinformation des Messmusters (M) auf Basis einer zeitsynchronen Übermittlung über die sichere Bus-Verbindung (6) und/oder auf Basis eines Zeitstempels ermittelt wird.

## Claims

1. Method for automated control of a least one machine component (1) in a plant (2) wherein the machine component (1) is controlled by an automation component (7), the plant (2) having a safety area (4) monitored by means of at least one safety sensor (3) and the machine component (1) performing a protective action if a hazardous situation detected by the safety sensor (3) for protection objects (5), in particular persons and/or valuables, arises, **characterized in that** the machine component (1) is linked to an automation component (7) via a secure bus connection (6), wherein the automation component (7) controls the machine component (1) by transmitting control commands via the secure bus connection (6) to the machine component (1) and the automation component receives fed-back feedback signals as process data from the machine component (1) via the secure bus connection (6), wherein the safety sensor (3) is connected to the automation component (7) via the secure bus connection (6), wherein a measurement pattern (M), containing uncompressed measurement data of the safety sensor (3), which measurement data contain only the information measured by the safety sensor (3) and have not been combined with other data or parameters, wherein the uncompressed measurement data correspond to the measurement data of the safety sensor (3) before being subject of an object evaluation, is transmitted over the secure bus connection (6) to the automation component (7), the automation component (7) ascertaining the presence of a hazardous situation on the basis of the measurement pattern (M) and by using process data of the control of the machine component (1) and activating the machine component (1) to perform a protective action.

2. The method according to claim 1, **characterized in that** the protective action comprises a deactivation of at least parts of the machine component (1), the assumption of a protective position, an active reaction, for example the stopping of at least parts of the machine component (1), a change in the speed of at least parts of the machine component (1), an evasive movement, the triggering of a safety device such as an airbag or an extinguishing device, the triggering of an alarm or a combination thereof.

3. The method according to one of the claims 1 or 2, **characterized in that** hazardous situation is defined as the detection of foreign objects or persons in the safety area (4), the detection of positional errors of machine component (1) parts and/or the detection of positional errors of plant objects (8).

4. The method according to one of the claims 1 to 3, **characterized in that** the safety sensor (3) has at least one light grid arrangement (9).

5. The method according to claim 4, **characterized in that** at least two light grid arrangements (9, 9') can be arranged parallel next to one another in relation to the grid plane and displaced from one another in relation to the longitudinal extension of their light sensors.

6. The method according to one of the claims 4 or 5, **characterized in that** at least one light grid arrangement (9) is arranged diagonally in relation to a direction of movement of a plant object (8).

7. The method according to claim 5, **characterized in that** the process data is selected from a position, a speed and/or an acceleration of elements of the machine component (1) and/or a position, a speed and/or an acceleration of drive means for a plant object (8).

8. The method according to one of the claims 1 to 7, **characterized in that** the automation component (7) defines a definition area (D), wherein a deviation of the measurement pattern (M) or a portion of this measurement pattern (M) measured by the safety sensor (3) and transmitted to the automatization component (7) from the definition area (D) indicates a hazardous situation.

9. The method according to claim 8, **characterized in that** the automatization component (7) factors in a current or past measurement pattern (M) of the safety sensor (3) for ascertaining the definition area (D).

10. The method according to claim 9, **characterized in that** a certain change in the current or past measurement pattern (M) triggers a defined temporal change of the definition area (D).

11. The method according to one of the claims 1 to 10, **characterized in that** the measurement pattern (M) is transmitted synchronously from the at least one safety sensor (3) to the automation component (7) via the secure bus connection (6).

12. The method according to one of the claims 1 to 11, **characterized in that** the data transmitted from the safety sensor (3) to the automation component (7) are each provided with a time stamp.

13. The method according to one of the claims 1 to 12, **characterized in that** measurement pattern (M) transmitted to the automation component (7) via the secure bus connection (6) are in general complete pixel information of the safety sensor (6), particularly pixel information of a light grid.

14. Automation component (7) for controlling at least one machine component (1) in a plant (2), **characterized in that** the automation component (7) controls the machine component (1) by transmitting control commands via the secure bus connection (6) to the machine component (1) and the automation component receives fed-back feedback signals as process data from the machine component (1) via the secure bus connection (6), wherein the automation component (7) has an interface via a secure bus connection (6) to at least one safety sensor (3), the safety sensor (3) monitoring a safety area (4) and the safety sensor (3) transmitting a measured measurement pattern (M), containing uncompressed measurement data of the safety sensor (3), which measurement data contain only the information measured by the safety sensor (3) and have not been combined with other data or parameters, wherein the uncompressed measurement data correspond to the measurement data of the safety sensor (3) before being subject of an object evaluation, to the automation component (7) via the secure bus connection (6), the automation component (7) evaluating the measurement pattern (M) to ascertain the presence of a hazardous situation for protection objects (5), in particular persons and/or valuable, by using process data of the control of the machine component (1) and, if a hazardous situation is present, activating the machine component (1) via the secure bus connection (6) for executing a protective action.

15. The automation component (7) according to claim 14, **characterized in that** the automatization component (7) connects the measurement pattern (M) obtained by the at least one safety sensor (3) to the process data based on temporal information.

16. The automation component (7) according to claim 15, **characterized in that** temporal information of the measurement pattern (M) is determined based on a time synchronous transmission via the secure bus connection (6) and/or based on a time stamp.

## Revendications

1. Procédé de commande automatisée d'au moins un composant de machine (1) dans une installation (2), dans lequel le composant de machine (1) est commandé au moyen d'un composant d'automatisation (7), dans lequel l'installation (2) comporte une zone de sécurité (4) surveillée au moyen d'au moins un capteur de sécurité (3) et le composant de machine (1) exécute une action de protection lorsqu'une situation dangereuse pour des objets à protéger (5), en particulier des personnes et/ou des biens matériels, est détectée par le capteur de sécurité (3), **caractérisé en ce que** le composant de machine (1) est connecté au composant d'automatisation (7) par l'intermédiaire d'une connexion de bus (6) sécurisée, dans lequel le composant d'automatisation (7) commande le composant de machine (1) par transmission des ordres de commande au composant de machine (1) par l'intermédiaire de la connexion de bus (6) sécurisée et par renvoi des signaux de retour en tant que données de processus au composant d'automatisation depuis le composant de machine (1) par l'intermédiaire de la connexion de bus (6) sécurisée, dans lequel le capteur de sécurité (3) est connecté au composant d'automatisation (7) par l'intermédiaire de la connexion de bus (6) sécurisée, dans lequel un modèle de mesure (M) mesuré par le capteur de sécurité (3), lequel contient des données de mesure non compressées du capteur de sécurité (3), lesquelles données de mesure seulement contiennent les information mesurées par le capteur de sécurité (3) et n'ont pas été combinées avec d'autre données ou paramètres, les données de mesure non compressées correspondant aux données de mesure du capteur de sécurité (3) avant d'être soumises à une évaluation d'objet, est transmis au composant d'automatisation (7) par l'intermédiaire de la connexion de bus (6) sécurisée, dans lequel le composant d'automatisation (7) détermine la présence d'une situation dangereuse en fonction du modèle de mesure (M) et à l'aide des données de processus de la commande du composant de machine (1), et commande le composant de machine (1) par l'intermédiaire de la connexion de bus (6) sécurisée pour exécuter l'action de protection.

2. Procédé selon la revendication 1, **caractérisé en ce que** l'action de protection comprend la désactivation d'au moins des parties du composant de machine (1), l'occupation d'une position de protection, la réaction active, telle que l'arrêt des au moins des parties du composant de machine (1), le changement de vitesse des au moins des parties du composant de machine (1), le mouvement d'évitement, le déclenchement d'un dispositif de protection tel qu'un airbag ou un dispositif d'extinction, le déclenchement d'une alarme ou leurs combinaisons.

3. Procédé selon l'une des revendications 1 ou 2, **caractérisé en ce que** la détection des objets étrangers ou des personnes dans la zone de sécurité (4), la détection des erreurs de positionnement de pièces du composant de machine (1) et/ou la détection des erreurs de positionnement des objets d'installation (8) sont définies comme situation dangereuse.

4. Procédé selon l'une quelconque des revendications 1 à 3, **caractérisé en ce que** le capteur de sécurité (3) comporte au moins un agencement de grille lumineuse (9).

5. Procédé selon la revendication 4, **caractérisé en ce que** les au moins deux agencements de grille lumineuses (9, 9') sont disposés parallèlement l'un à l'autre selon leur plan de grille et décalés l'un de l'autre selon l'étendue longitudinale de leurs capteurs de lumière.

6. Procédé selon l'une des revendications 4 ou 5, **caractérisé en ce que** l'au moins un agencement de grille lumineuse (9) est disposé de manière inclinée par rapport à une direction de déplacement d'un objet d'installation (8).

7. Procédé selon la revendication 5, **caractérisé en ce que** les données de processus sont choisies parmi une position, une vitesse et/ou une accélération d'éléments constitutifs du composant de machine (1).

8. Procédé selon l'une quelconque des revendications 1 à 7, **caractérisé en ce que** le composant d'automatisation (7) définit une plage de définition (D), un écart du modèle de mesure (M) mesuré par le capteur de sécurité (3) et transmis au composant d'automatisation (7) ou d'une sous-zone dudit modèle de mesure (M) de la zone de définition (D) indique une situation dangereuse.

9. Procédé selon la revendication 8, **caractérisé en ce que** le composant d'automatisation (7) prend en compte un modèle de mesure (M) actuel ou passé du capteur de sécurité (3) pour déterminer la plage de définition (D).

10. Procédé selon la revendication 9, **caractérisé en ce qu'**un changement déterminé du modèle de mesure (M) actuel ou passé déclenche un changement défini dans le temps de la plage de définition (D).

11. Procédé selon l'une quelconque des revendications 1 à 10, **caractérisé en ce que** la transmission du modèle de mesure (M) de l'au moins un capteur de sécurité (3) au composant d'automatisation (7) s'effectue de manière synchronisée dans le temps par l'intermédiaire de la connexion de bus (6) sécurisée.

12. Procédé selon l'une quelconque des revendications 1 à 11, **caractérisé en ce que** les données transmises du capteur de sécurité (3) au composant d'automatisation (7) sont respectivement pourvues d'un horodatage.

13. Procédé selon l'une quelconque des revendications 1 à 12, **caractérisé en ce que** le modèle de mesure (M) transmis au composant d'automatisation (7) par l'intermédiaire de la connexion de bus (6) sécurisée représente essentiellement entièrement des informations de pixel du capteur de sécurité (3), en particulier des informations de pixel d'une grille lumineuse.

14. Composant d'automatisation (7) destiné à la commande d'au moins un composant de machine (1) dans une installation (2), **caractérisé en ce que** le composant d'automatisation (7) commande le composant de machine (1) par transmission des ordres de commande au composant de machine (1) par l'intermédiaire d'une connexion de bus (6) sécurisée et par renvoi des signaux de retour en tant que données de processus au composant d'automatisation depuis le composant de machine (1) par l'intermédiaire de la connexion de bus (6) sécurisée, dans lequel le composant d'automatisation (7) comporte une interface par l'intermédiaire de la connexion de bus (6) sécurisée avec au moins un capteur de sécurité (3), dans lequel le capteur de sécurité (3) surveille une zone de sécurité (4) et le capteur de sécurité (3) transmet un modèle de mesure (M) mesuré, lequel contient des données de mesure non compressées du capteur de sécurité (3), lesquelles données de mesure seulement contiennent les information mesurées par le capteur de sécurité (3) et n'ont pas été combinées avec d'autre données ou paramètres, les données de mesure non compressées correspondant aux données de mesure du capteur de sécurité (3) avant d'être soumises à une évaluation d'objet, au composant d'automatisation (7) par l'intermédiaire de la connexion de bus (6) sécurisée, dans lequel le composant d'automatisation (7) évalue le modèle de mesure (M) et, à l'aide des données de processus de la commande du composant de machine (1), détermine la présence d'une situation dangereuse pour des objets à protéger (5), en particulier des personnes et/ou des biens matériels, et commande le composant de machine (1), en présence d'une situation dangereuse, par l'intermédiaire de la connexion de bus (6) sécurisée, pour exécuter une action de protection.

15. Composant d'automatisation (7) selon la revendication 14, **caractérisé en ce que** le composant d'automatisation (7) relie le modèle de mesure (M) reçu de l'au moins un capteur de sécurité (3) aux données de processus en fonction des informations temporelles.

16. Composant d'automatisation (7) selon la revendication 15, **caractérisé en ce que** les informations temporelles du modèle de mesure (M) sont déterminées en fonction d'une transmission synchronisée dans le temps par l'intermédiaire de la connexion de bus (6) sécurisée et/ou en fonction d'un horodatage.
